# EUROPEAN PATENT APPLICATION

(11) **EP 4 851 764 A1**
(43) Date of publication of application: **09.12.2026**
(21) Application number: 24962967.6
(22) Date of filing: 11.12.2024
(51) Int. Cl.: G06F 3/041

(54) **PRESSURE SENSOR AND WEARABLE DEVICE**

(71) Applicant: Shenzhen Shokz Co., Ltd., Shenzhen, Guangdong 518108 (CN)
(72) Inventor: YUAN, Yongshuai, Shenzhen, Guangdong 518108 (CN); LIAO, Fengyun, Shenzhen, Guangdong 518108 (CN); QI, Xin, Shenzhen, Guangdong 518108 (CN)
(74) Representative: Wang, Bo
(86) International application number: PCT/CN2024/138543
(87) International publication number: WO 2026/123253

(57) **Abstract**

One or more embodiments of the present disclosure relate to a pressure sensor and a wearable device. The pressure sensor comprises a first resistor layer and a second resistor layer disposed opposite to each other, a touch sensing region being provided on a side of the first resistor layer facing away from the second resistor layer; an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer; a processor, configured to read an electrical signal generated after the first resistor layer and the second resistor layer are electrically connected. The pressure sensor has high sensitivity. At least one of the touch position, the touch strength, and the sliding direction of the touch can be determined. The touch accuracy is high, and the touch flexibility is strong, thereby facilitating user operation and improving user experience.

## Description

### TECHNICAL FIELD

The present disclosure relates to the field of sensing technology, and in particular to a pressure sensor and a wearable device.

### BACKGROUND

With the increasing popularity of wearable devices, pressure sensors, integrated into the wearable devices (e.g., earphones, acoustic glasses, or the like) as touch panels, have been more and more widely used. In usage scenarios, to enhance the usage experience of the pressure sensors and the wearable devices, it is desirable to provide a pressure sensor and a wearable device with excellent performance.

### SUMMARY

One or more embodiments of the present disclosure provide a pressure sensor, comprising: a first resistor layer and a second resistor layer disposed opposite to each other, a touch sensing region being provided on a side of the first resistor layer facing away from the second resistor layer; an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer; a processor, configured to read an electrical signal generated after the first resistor layer and the second resistor layer are electrically connected.

One or more embodiments of the present disclosure further provide a wearable device, comprising: a pressure sensor, disposed on a side of the wearable device facing away from a user in a worn state; wherein the pressure sensor includes: a first resistor layer and a second resistor layer disposed opposite to each other, a touch sensing region being provided on a side of the first resistor layer facing away from the second resistor layer; an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer; a processor, configured to read an electrical signal generated after the first resistor layer and the second resistor layer are electrically connected.

One or more embodiments of the present disclosure further provide a wearable device comprising: a pressure sensor, disposed on a side of the wearable device facing away from a user in a worn state; wherein the pressure sensor is configured to generate different instructions in response to different touch strengths when touched by an external force.

One or more embodiments of the present disclosure further provide a wearable device, comprising: a pressure sensor, disposed on a side of the wearable device facing away from a user in a worn state; wherein the pressure sensor has varying touch responses at different positions along a first direction, and the pressure sensor is configured to generate different instructions in response to different sliding directions when touched by an external force.

### BRIEF DESCRIPTION OF THE DRAWINGS

The present disclosure will be further described by way of exemplary embodiments, which will be described in detail with reference to the drawings. These embodiments are nonlimiting, and in these embodiments, like reference numerals represent like structures, wherein:
FIG. 1 is a block diagram of a pressure sensor according to some embodiments of the present disclosure;
FIG. 2 is a schematic structural diagram of a pressure sensor according to some embodiments of the present disclosure;
FIG. 3 is a schematic structural diagram of an insulating layer according to some embodiments of the present disclosure;
FIG. 4 is another schematic structural diagram of an insulating layer according to some embodiments of the present disclosure;
FIG. 5 is another schematic structural diagram of an insulating layer according to some embodiments of the present disclosure;
FIG. 6 is another schematic structural diagram of an insulating layer according to some embodiments of the present disclosure;
FIG. 7 is a schematic structural diagram of a first resistor layer and a second resistor layer according to some embodiments of the present disclosure;
FIG. 8 is a schematic diagram of determining a touch position according to some embodiments of the present disclosure;
FIG. 9 is a schematic circuit diagram when a first resistor layer and a second resistor layer are electrically connected according to some embodiments of the present disclosure;
FIG. 10 is a schematic structural diagram of a wearable device according to some embodiments of the present disclosure.

### DETAILED DESCRIPTION

To more clearly illustrate the technical solutions of the embodiments of the present disclosure, the accompanying drawings to be used in the description of the embodiments are briefly introduced below. It is apparent that the drawings in the following description are merely some examples or embodiments of the present disclosure. For a person of ordinary skill in the art, the present disclosure may also be applied to other similar scenarios based on these drawings without inventive efforts. Unless apparently stated or indicated otherwise from the context, the same reference signs in the drawings represent the same structures or operations.

It should be understood that, as used herein, 'system', 'device', 'unit', and/or 'module' are a manner configured to distinguish between different components, elements, parts, portions, or assemblies of different levels. However, if other words can achieve the same purpose, then the words may be replaced by other expressions.

As shown in the present disclosure and the claims, unless the context clearly indicates an exception, words such as 'a', 'an', and/or 'the' do not specifically refer to the singular number but may also include the plural number. Generally, the terms 'comprising' and 'including' only suggest inclusion of clearly identified steps and elements, and these steps and elements do not constitute an exhaustive list, and a method or a device may also include other steps or elements.

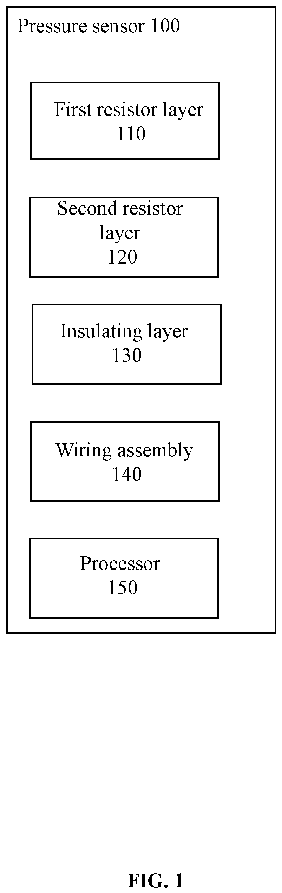

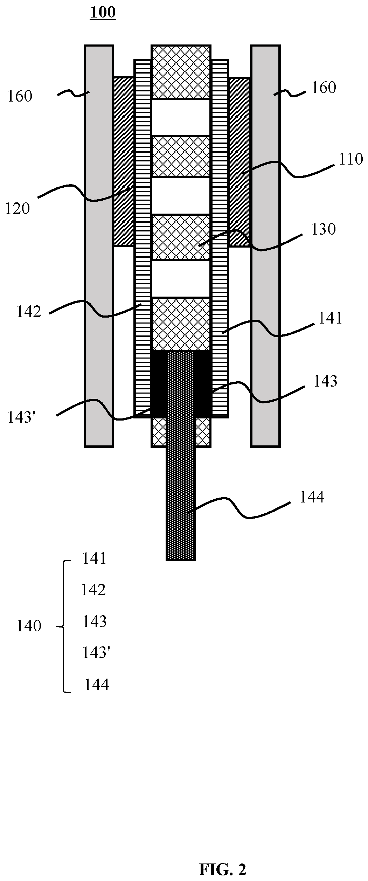

FIG. 1 is a block diagram of a pressure sensor according to some embodiments of the present disclosure, and FIG. 2 is a schematic structural diagram of a pressure sensor according to some embodiments of the present disclosure.

As shown in FIGs. 1 and 2, according to an aspect of the present disclosure, a pressure sensor 100 is provided. The pressure sensor 100 mainly includes a first resistor layer 110 and a second resistor layer 120 disposed opposite to each other, and an insulating layer 130 is disposed between the first resistor layer 110 and the second resistor layer 120.

In some embodiments, the first resistor layer 110 may serve as a touch resistor layer, and a touch sensing region is provided on a side of the first resistor layer 110 facing away from the second resistor layer 120 for touch control by a user. In some embodiments, the second resistor layer 120 may also serve as a touch resistor layer, and a touch sensing region is provided on a side of the second resistor layer 120 facing away from the first resistor layer 110 for touch control by a user. It should be noted that, in practical application scenarios, the pressure sensor 100 may serve as a part of a wearable device. The pressure sensor 100 may be disposed on a side of the wearable device that does not contact a user's body (e.g., a side facing away from the user's body, or a side not contacting the user's body and facing a user's face, or the like). One of the first resistor layer 110 and the second resistor layer 120 that is disposed facing an outer surface of the wearable device serves as a touch resistor layer and is provided with a touch sensing region. It should be noted that, when a user performs touch control, the touch sensing region may not directly contact the user's body. Other structures may also be provided outside the touch sensing region (e.g., a substrate 160, or the like). The touch sensing region indicates that the region is relatively more sensitive to a transmitted external force and has a high response sensitivity to the external force.

In some embodiments, the material of the first resistor layer 110 and the second resistor layer 120 may be a conductive material that can form uniform resistance, such as carbon paste, silver paste, or the like. In some embodiments, when the pressure sensor 100 is applied to a touch display screen, the material of the first resistor layer 110 and the second resistor layer 120 may be a material that can form uniform resistance and has high visible light transmittance, such as indium tin oxide (ITO), or the like.

In some embodiments, the insulating layer 130 is configured such that: when no external force for touch control is applied, the insulating layer 130 electrically insulates the first resistor layer 110 from the second resistor layer 120, i.e., no electrical signal is transmitted between the first resistor layer 110 and the second resistor layer 120; and when an external force for touch control is applied, a touched region on the touch sensing region deforms toward the second resistor layer 120, and the insulating layer 130 allows the deformed first resistor layer 110 to form an electrical connection with the second resistor layer 120, i.e., an electrical signal can be transmitted between the first resistor layer 110 and the second resistor layer 120. The deformation of the touch sensing region upon being touched may be understood as the touched region of the touch sensing region being deformed by a transmitted external force. A user may directly apply an external force to the touch sensing region, and the external force directly acts on the touch sensing region; or, the user may also not directly apply an external force to the touch sensing region, and the external force is transmitted to the touch sensing region through other components. For example, a user may apply an external force to the substrate 160, and the external force is transmitted to the touch sensing region through the substrate 160.

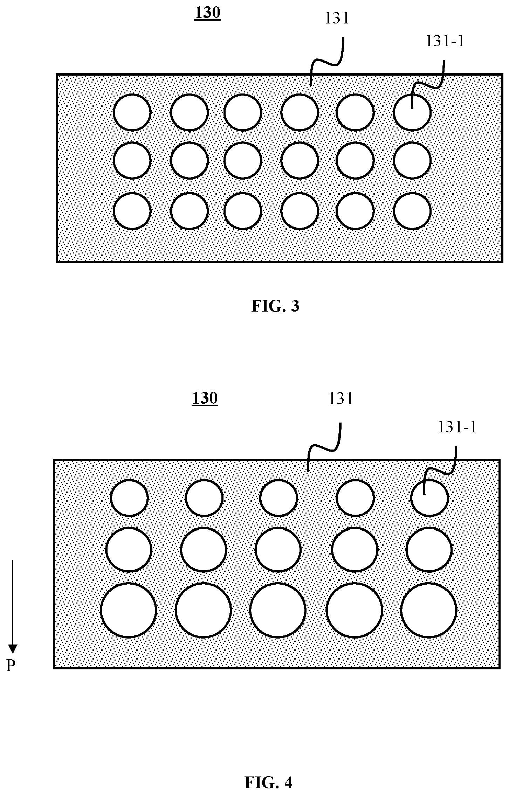

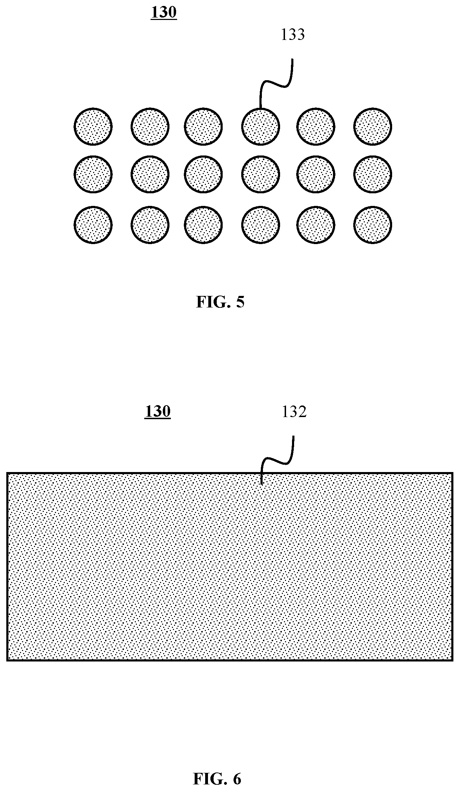

In some embodiments, the material of the insulating layer 130 may be a material having insulating properties. For example, the insulating layer 130 may be an insulating film, for example, a PET film, a PI film, or the like. By providing a hole array on the insulating film, the function of the insulating layer 130 is achieved. More descriptions regarding this may be found elsewhere in the present disclosure (e.g., FIGs. 3 and 4 and related descriptions thereof). As another example, the insulating layer 130 may be a plurality of microbeads. By arranging the plurality of microbeads, the function of the insulating layer 130 is achieved. More descriptions regarding this may be found elsewhere in the present disclosure (e.g., FIG. 5 and related descriptions thereof). In some embodiments, the insulating layer 130 may be an electronic coating. By using pressure-sensitive properties of the electronic coating, the function of the insulating layer 130 is achieved. More descriptions regarding this may be found elsewhere in the present disclosure (e.g., FIG. 6 and related descriptions thereof).

In some embodiments, the pressure sensor 100 further includes a wiring assembly 140, and the wiring assembly 140 is mainly configured to provide input and output of electrical signals. In some embodiments, the wiring assembly 140 includes a first electrode 141, a second electrode 142, a conductive member 143, a conductive member 143', and a circuit board 144. The circuit board 144 is disposed at a position that does not affect electrical insulation or electrical connection between the first resistor layer 110 and the second resistor layer 120. For example, in a direction from the first resistor layer 110 to the second resistor layer 120, the circuit board 144 may be disposed at a position in the insulating layer 130 that is not covered by the first resistor layer 110 or the second resistor layer 120. As another example, when the insulating layer 130 is an insulating film provided with a hole array, the circuit board 144 may be disposed in a region on the insulating film where the hole array is not provided. As another example, the circuit board 144 may be disposed outside the pressure sensor 100 and forms an electrical connection with the pressure sensor 100 as an external component through a wire. The circuit board 144 is configured to connect to an external circuit for input or output of electrical signals. The first electrode 141 is electrically connected to one side of the circuit board 144 through the conductive member 143, and the first electrode 141 is electrically connected to one side of the first resistor layer 110, thereby allowing a circuit on the one side of the circuit board 144 to be electrically connected to the first resistor layer 110. The second electrode 142 is electrically connected to the other side of the circuit board 144 through the conductive member 143', and the second electrode 142 is electrically connected to one side of the second resistor layer 120, thereby allowing a circuit on the other side of the circuit board 144 to be electrically connected to the second resistor layer 120. In some embodiments, the first electrode 141 and the second electrode 142 may be disposed on two inner sides of the first resistor layer 110 and the second resistor layer 120 that face each other to simplify the circuit structure. In some embodiments, the first electrode 141 and the second electrode 142 may also be disposed on two outer sides of the first resistor layer 110 and the second resistor layer 120 that face away from each other. In some embodiments, one of the first electrode 141 and the second electrode 142 may be disposed on an inner side of a corresponding resistor layer. The other of the first electrode 141 and the second electrode 142 may be disposed on an outer side of the other corresponding resistor layer.

In some embodiments, the material of the first electrode 141 and the second electrode 142 may be a material having good conductivity, such as metal, or the like. In some embodiments, for convenience of fabrication, the first electrode 141 and the second electrode 142 may be silver paste leads, metal plating layers, or the like, and the first electrode 141 and the second electrode 142 may be directly fabricated on corresponding resistor layers.

In some embodiments, the circuit board 144 may be a flexible circuit board to reduce damage and interference to the circuit board 144 caused by deformation of the first resistor layer 110 due to an external force.

In some embodiments, the conductive member 143 and the conductive member 143' may be conductive adhesive films (e.g., an anisotropic conductive film (ACF)), such that while achieving electrical connection between the circuit board 144 and corresponding electrodes, the circuit board 144 and the corresponding electrodes are adhesively fixed. In some embodiments, the conductive member 143 and the conductive member 143' may also be wires to reduce wiring difficulty and make the setting positions of the first electrode 141, the second electrode 142, and the circuit board 144 more flexible.

In some embodiments, the pressure sensor 100 may also include a substrate 160. The substrate 160 is disposed on an outermost side of the pressure sensor 100 to provide buffer protection for the pressure sensor 100. In some embodiments, the material of the substrate 160 may be a polymer film, such as a polyimide (PI) film, a polyethylene terephthalate (PET) film, or the like.

In some embodiments, substrates 160 may be provided on both the side of the first resistor layer 110 facing away from the second resistor layer 120 and the side of the second resistor layer 120 facing away from the first resistor layer 110 to protect the pressure sensor 100. In this case, when the pressure sensor 100 is disposed on a display screen of a wearable device to form a touch display screen, an insulating and light-transmissive separation layer may be provided between the pressure sensor 100 and the display screen. For example, the separation layer may include a polycarbonate layer. The polycarbonate layer can separate and insulate the display screen (e.g., an LCD screen) from the pressure sensor 100, and also has good light transmittance, thereby facilitating display of the display screen.

In some embodiments, one of the side of the first resistor layer 110 facing away from the second resistor layer 120 and the side of the second resistor layer 120 facing away from the first resistor layer 110 may be provided with a substrate 160, and the side of the corresponding resistor layer provided with the substrate is provided with a touch sensing region. In this case, when the pressure sensor 100 is disposed on a display screen of a wearable device to form a touch display screen, an insulating, light-transmissive, and supporting separation layer may be provided between the pressure sensor 100 and the display screen. For example, the separation layer may include a glass layer. The glass layer can provide supporting and insulating functions, and also has good light transmittance, thereby facilitating display of the display screen.

In some embodiments, the pressure sensor 100 may also include a processor 150. The processor 150 is configured to read an electrical signal generated after the first resistor layer 110 and the second resistor layer 120 are electrically connected. In some embodiments, the processor 150 may determine a next operation based on the read electrical signal, for example, determining a touch position, determining a touch strength, generating corresponding instructions, or the like.

When no external force acts on the touch sensing region, the first resistor layer 110 remains in an initial state, and the first resistor layer 110 and the second resistor layer 120 are electrically insulated from each other by the insulating layer 130. When an external force acts on the touch sensing region, the first resistor layer 110 deforms at a touch position of the external force, and the deformation allows the insulating layer 130 to form an electrical connection between the first resistor layer 110 and the second resistor layer 120. For example, the deformed position of the first resistor layer 110 may pass through the insulating layer 130, or the deformation of the first resistor layer 110 may also cause the insulating layer 130 to deform, thereby causing the insulating layer 130 to no longer be insulating, or the like. More descriptions regarding the insulating layer 130 may be found in the following related descriptions.

FIG. 3 is a schematic structural diagram of an insulating layer according to some embodiments of the present disclosure.

As shown in FIG. 3, in some embodiments, the insulating layer 130 includes an insulating film 131 provided with a hole array, and the hole array includes a plurality of holes 131-1. The hole array is configured to allow the deformation generated when the first resistor layer 110 is touched by an external force for touch control to pass through the hole 131-1 of the plurality of holes corresponding to the touch position, thereby allowing the electrical connection of the first resistor layer 110 with the second resistor layer 120 when touched by the external force for touch control.

In some embodiments, the thickness of the insulating film 131 may affect the depth of the hole 131-1, thereby affecting the difficulty for the first resistor layer 110 to pass through the hole 131-1. If the thickness of the insulating film 131 is too large, the deformation required for the first resistor layer 110 to pass through the hole 131-1 and contact the second resistor layer 120 may be relatively large, and the corresponding external force required may also be relatively large, thereby causing the sensitivity of the pressure sensor 100 to be too low. If the thickness of the insulating film 131 is too small, the deformation required for the first resistor layer 110 to pass through the hole 131-1 may be relatively small, and the corresponding external force required may also be relatively small, the insulating function of the insulating layer 130 may be affected, and false touches may easily occur, thereby affecting the user experience. In some embodiments, to enable the pressure sensor 100 to have high sensitivity while further avoiding the occurrence of false touches, the thickness of the insulating film 131 may be 0.1 µm to 50 µm. In some embodiments, to further ensure that the pressure sensor 100 has high sensitivity, the thickness of the insulating film 131 may be 1 µm to 30 µm. In some embodiments, to further avoid the occurrence of false touches, the thickness of the insulating film 131 may be 10 µm to 20 µm. The thickness of the insulating film 131 refers to the thickness dimension of the insulating film 131 in an assembled state in a direction from the first resistor layer 110 to the second resistor layer 120.

In some embodiments, the shape of the hole 131-1 may be designed to reduce the difficulty for the deformation of the first resistor layer 110 to pass through the hole 131-1, thereby increasing the sensitivity of the pressure sensor 100. In some embodiments, to reduce the difficulty for the deformation of the first resistor layer 110 to pass through the hole 131-1 and thus increase the sensitivity of the pressure sensor 100, the hole 131-1 may adopt a symmetrical shape (e.g., circular, square, hexagonal, or the like).

In some embodiments, the size of the hole 131-1 may also affect the difficulty for the first resistor layer 110 to pass through the hole 131-1. If the size of the hole 131-1 is too small, it may cause the contact portion between the first resistor layer 110 and the second resistor layer 120 at the touch position to be too small, thereby causing the sensitivity of the pressure sensor 100 to be too low. If the size of the hole 131-1 is too large, the external force required for the first resistor layer 110 to pass through the hole 131-1 may be relatively small, and the deformation generated by the first resistor layer 110 and/or the second resistor layer 120 (e.g., when the user performs intense exercise, the first resistor layer 110 and/or the second resistor layer 120 may deform without an external force being applied by the user) may easily cause false touches, thereby affecting the user experience. In some embodiments, to enable the pressure sensor 100 to have high sensitivity while further avoiding the occurrence of false touches, the diameter of each of the plurality of holes 131 of the hole array may be 3 mm to 10 mm. In some embodiments, to further ensure that the pressure sensor 100 has high sensitivity, the diameter of each of the plurality of holes 131 of the hole array may be 5 mm to 8 mm. In some embodiments, to further avoid the occurrence of false touches, the diameter of each of the plurality of holes 131 of the hole array may be 6 mm to 7 mm.

In some embodiments, the density of the distribution of the holes 131-1 in the hole array may also affect the sensitivity of the pressure sensor 100. The denser the distribution of the holes 131-1 in the hole array, the more contact portions between the first resistor layer 110 and the second resistor layer 120 at the touch position, and the higher the sensitivity of the pressure sensor 100. The sparser the distribution of the holes 131-1 in the hole array, the fewer contact portions between the first resistor layer 110 and the second resistor layer 120 at the touch position, and the lower the sensitivity of the pressure sensor 100. However, if the distribution of the holes 131-1 in the hole array is too dense, false touches may easily occur. In some embodiments, the density of the holes 131-1 in the hole array may be represented by a spacing between any two adjacent holes 131-1 in the hole array. The smaller the spacing between any two adjacent holes 131-1, the denser the distribution of the holes 131-1 in the hole array; the larger the spacing between any two adjacent holes 131-1, the sparser the distribution of the holes 131-1 in the hole array. The spacing between any two adjacent holes 131-1 refers to the connecting line of the centers of the two holes 131-1 (e.g., the connecting line of the centers of the end faces of the two holes 131-1 on a side of the insulating film 131 facing the first resistor layer 110 or facing the second resistor layer 120). In some embodiments, to enable the pressure sensor 100 to have high sensitivity while further avoiding the occurrence of false touches, the spacing between any two adjacent holes 131 of the hole array may be 3 mm to 5 mm. In some embodiments, to further ensure that the pressure sensor 100 has high sensitivity, the spacing between any two adjacent holes 131 of the hole array may be 3.2 mm to 4 mm. In some embodiments, to further avoid the occurrence of false touches, the diameter of each of the plurality of holes 131 of the hole array may be 3.5 mm to 3.7 mm.

FIG. 4 is another schematic structural diagram of an insulating layer according to some embodiments of the present disclosure.

In practical application scenarios, when the user touches the pressure sensor 100, in addition to press-point control, gesture control may also be performed. As shown in FIG. 4, in some embodiments, to enable the pressure sensor 100 to have gesture control functionality and improve the touch capability of the pressure sensor 100, in a first direction (e.g., the direction P shown in FIG. 4), the diameter of the holes 131-1 in the hole array gradually increases. That is, the sensitivity of the touch sensing region on the first resistor layer 110 gradually increases along the first direction. When the user's finger slides along the first direction P (the magnitude of the external force applied by the user's finger may be considered substantially unchanged), the position where the deformation mainly occurs on the first resistor layer 110 may also move along the direction P. When the position where the deformation mainly occurs on the first resistor layer 110 corresponds to a hole with a smaller size, the first resistor layer 110 and the second resistor layer 120 generate a first electrical signal after being electrically connected; when the position where the deformation mainly occurs on the first resistor layer 110 corresponds to a hole with a larger size, the first resistor layer 110 and the second resistor layer 120 generate a second electrical signal after being electrically connected. It can be understood that a difference exists in the amplitudes of the first electrical signal and the second electrical signal, which can reflect different sensitivities of different positions on the pressure sensor 100 when pressed. Specifically, when the user's finger slides along the first direction P, the sensitivity of the pressure sensor 100 gradually increases, and based on the change rule of the electrical signal related to the sensitivity, the sliding direction of the user's finger can be determined. Further, the processor 150 may generate corresponding instructions based on the user's gesture, thereby enriching the touch manners of the pressure sensor 100. The first direction P may be any direction in the plane where the touch sensing region is located.

FIG. 5 is another schematic structural diagram of an insulating layer according to some embodiments of the present disclosure.

As shown in FIG. 5, in some embodiments, the insulating layer 130 may include a plurality of microbeads 133, and a gap is reserved between any two adjacent microbeads 133 of the plurality of microbeads.

In some embodiments, the microbeads 133 may be insulating microbeads. When no external force is applied, the plurality of microbeads 133 electrically insulate the first resistor layer 110 from the second resistor layer 120; after an external force is applied, the first resistor layer 110 at the touch position of the external force deforms, and the deformation passes through the gap between the microbeads 133 and forms an electrical connection with the second resistor layer 120, thereby realizing the electrical connection of the first resistor layer 110 with the second resistor layer 120.

In some embodiments, the size of the microbeads 133 and the distribution density of the microbeads 133 may affect the sensitivity of the pressure sensor 100. If the size of the microbeads 133 is too large and the spacing between the first resistor layer 110 and the second resistor layer 120 is too large, the deformation required for the first resistor layer 110 to pass through the gap between the microbeads 133 and contact the second resistor layer 120 may be relatively large, and the corresponding external force required may also be relatively large, thereby causing the sensitivity of the pressure sensor 100 to be too low. If the size of the microbeads 133 is too small, false touches may easily occur, thereby affecting the user experience. If the distribution density of the microbeads 133 (e.g., the spacing between any two adjacent microbeads 133) is too small, it may cause the contact portion between the first resistor layer 110 and the second resistor layer 120 at the touch position to be too small, thereby causing the sensitivity of the pressure sensor 100 to be too low. If the distribution density of the microbeads 133 (e.g., the spacing between any two adjacent microbeads 133) is too large, false touches may easily occur, thereby affecting the user experience. In some embodiments, to enable the pressure sensor 100 to have high sensitivity while further avoiding the occurrence of false touches, the size of the microbeads 133 may be 10 µm to 100 µm, and the spacing between any two adjacent microbeads 133 may be 0.5 mm to 5 mm. The spacing between any two adjacent microbeads 133 refers to the distance between the centers of the two microbeads 133, or the minimum distance between the two microbeads 133.

In some embodiments, the size and the distribution density of the microbeads 133 may be designed according to different application scenarios. In some embodiments, when the pressure sensor 100 is applied to high-precision and high-sensitivity touchscreens (e.g., high-resolution displays, or the like), the size of the microbeads 133 may be 10 µm to 30 µm, and the spacing between any two adjacent microbeads may be 0.5 mm to 1.5 mm. In some embodiments, when the pressure sensor 100 is applied to general-purpose touchscreens (e.g., mobile phone or smartwatch touchscreens, or the like) (e.g., high-resolution displays), the size of the microbeads 133 may be 30 µm to 60 µm, and the spacing between any two adjacent microbeads may be 0.5 mm to 5 mm. In some embodiments, when the pressure sensor 100 is applied to relatively thick touchscreen substrates or touchscreens requiring a relatively large support gap (e.g., industrial touchscreens, or the like), the size of the microbeads 133 may be 60 µm to 100 µm, and the spacing between any two adjacent microbeads may be 2.5 mm to 3.5 mm.

Since the microbeads 133 themselves have a certain size, when a relatively small external force is applied, the deformation of the first resistor layer 110 caused by the external force may be relatively small, and the deformation may not be able to pass through the gap between the microbeads 133 and contact the second resistor layer 120, thereby causing the first resistor layer 110 and the second resistor layer 120 to still be electrically insulated by the microbeads 133. The above situation may cause an effective threshold for the external force to exist, and when the external force is less than the effective threshold, the first resistor layer 110 and the second resistor layer 120 cannot be electrically connected, at which time the pressure sensor 100 cannot identify the existence of the external force, thereby affecting the sensitivity of the pressure sensor 100.

In some embodiments, to reduce the effective threshold of the external force when the insulating layer 130 includes microbeads 133, the microbeads 133 may have pressure-sensitive properties. When no external force is applied, the resistance of the microbeads 133 is very large, the first resistor layer 110 and the second resistor layer 120 on both sides of the microbeads 133 may be regarded as an open circuit, and the microbeads 133 can electrically insulate the first resistor layer 110 from the second resistor layer 120. After an external force is applied, the resistance of the microbeads 133 decreases, and in addition to the first resistor layer 110 and the second resistor layer 120 being electrically conductive through the deformation of the first resistor layer 110 passing through the gap between adjacent microbeads 133 and making electrical contact with the second resistor layer 120, the first resistor layer 110 and the second resistor layer 120 may also be electrically conductive through the microbeads 133 to achieve an electrical connection, thereby reducing the effective threshold of the external force required for the electrical connection of the first resistor layer 110 with the second resistor layer 120.

FIG. 6 is another schematic structural diagram of an insulating layer according to some embodiments of the present disclosure.

As shown in FIG. 6, in some embodiments, the insulating layer 130 may include an insulating coating 132. The insulating coating 132 has pressure-sensitive properties. When no external force is applied, the resistance of the insulating coating 132 is high, and the first resistor layer 110 and the second resistor layer 120 on both sides of the insulating coating 132 may be considered as an open circuit, thereby allowing the insulating coating 132 to electrically insulate the first resistor layer 110 from the second resistor layer 120. After an external force is applied, the resistance of the insulating coating 132 sharply decreases, and the first resistor layer 110 and the second resistor layer 120 form an electrical connection through the insulating coating 132.

In some embodiments, at least one of a side of the first resistor layer 110 facing toward the second resistor layer 120 and a side of the second resistor layer 120 facing toward the first resistor layer 110 may be provided with the insulating coating 132.

The thickness of the insulating coating 132 may affect the insulating performance of the insulating coating 132 and the magnitude of the resistance when subjected to an external force. When the thickness of the insulating coating 132 is too large, a larger external force for touch control is required to reduce the resistance of the insulating coating 132 to a level where it can cause the first resistor layer 110 and the second resistor layer 120 to form an electrical connection, thereby causing the sensitivity of the pressure sensor 100 to be too low. When the thickness of the insulating coating 132 is too small, a false touch may occur. In some embodiments, to allow the pressure sensor 100 to have high sensitivity while further avoiding a false touch, the thickness of the insulating coating 132 may be 1 nm to 999 nm. In some embodiments, to further ensure that the pressure sensor 100 has high sensitivity, the thickness of the insulating coating 132 may be 10 nm to 800 nm. In some embodiments, to further avoid a false touch, the thickness of the insulating film 131 may be 100 nm to 600 nm. The thickness of the insulating coating 132 refers to a thickness dimension of the insulating coating 132 in an assembled state in a direction from the first resistor layer 110 toward the second resistor layer 120.

In some embodiments, to improve the wear resistance and hardness of the insulating coating 132 and to improve the service life of the pressure sensor 100, the insulating coating 132 may include nanoparticles, ceramic powder, or the like.

Since the insulating layer 130 itself has a certain thickness, when a relatively small external force for touch control is applied, it may not be possible to cause the first resistor layer 110 and the second resistor layer 120 to form an electrical connection through the insulating layer 130. For example, when the insulating layer 130 is the insulating film 131, the deformation generated in the first resistor layer 110 by the external force may be small, and the deformation may not be able to pass through the hole 131-1 to contact the second resistor layer 120. As another example, when the insulating layer 130 is the insulating coating 132, the force on the insulating coating 132 is small, and the resistance of the insulating coating 132 is still large, thereby causing the first resistor layer 110 and the second resistor layer 120 to still be electrically insulated by the insulating coating 132. As another example, when the insulating layer 130 is a plurality of microbeads 133, the deformation generated in the first resistor layer 110 by the external force for touch control may be small, and the deformation may not be able to pass through the gap between the microbeads 133 to contact the second resistor layer 120, or a force on the microbeads 133 having pressure-sensitive properties is small, and the resistance of the microbeads 133 is still large, thereby causing the first resistor layer 110 and the second resistor layer 120 to still be electrically insulated by the microbeads 133. The above situation may cause the external force for touch control to have an effective threshold. When the external force for touch control is less than the effective threshold, the first resistor layer 110 and the second resistor layer 120 cannot form an electrical connection. At this time, the pressure sensor 100 cannot recognize the presence of the external force for touch control, affecting the sensitivity of the pressure sensor 100.

To improve the sensitivity of the pressure sensor 100, the thickness of the insulating layer 130 in an assembled state is less than the thickness of the insulating layer 130 in a natural state. The assembled state refers to a state where the insulating layer 130 is in the pressure sensor 100 after assembly is completed as shown in FIG. 2, and the natural state refers to a state where the insulating layer 130 is unrestrained (e.g., a state when production has just been completed). By the foregoing setting, the effective threshold of the external force for touch control can be reduced, and the sensitivity of the pressure sensor 100 can be improved.

In some embodiments, in the assembled state, a preload force is provided between the first resistor layer 110 and the second resistor layer 120. The preload force may compress the insulating layer 130, thereby causing the thickness of the insulating layer 130 in the assembled state to be less than the thickness of the insulating layer 130 in the natural state.

By the foregoing design of the insulating layer 130, the pressure sensor 100 can have high sensitivity. Further, the pressure sensor 100 may further have a gesture touch control function, thereby enriching the touch control capability of the pressure sensor 100. In some embodiments, the processor 150 may be configured to fully utilize the touch control function of the pressure sensor 100, allowing the processor 150 to generate corresponding instructions according to a touch on the pressure sensor 100.

In actual use scenarios, the processor 150 is further configured to identify a touch position of the external force for touch control based on the electrical signal, thereby facilitating the processor 150 to perform a next operation or generate corresponding instructions. In some embodiments, the processor 150 may determine the touch position of the external force for touch control based on a voltage of a first electrode 141 and a second electrode 142 when the first resistor layer 110 and the second resistor layer 120 are in contact.

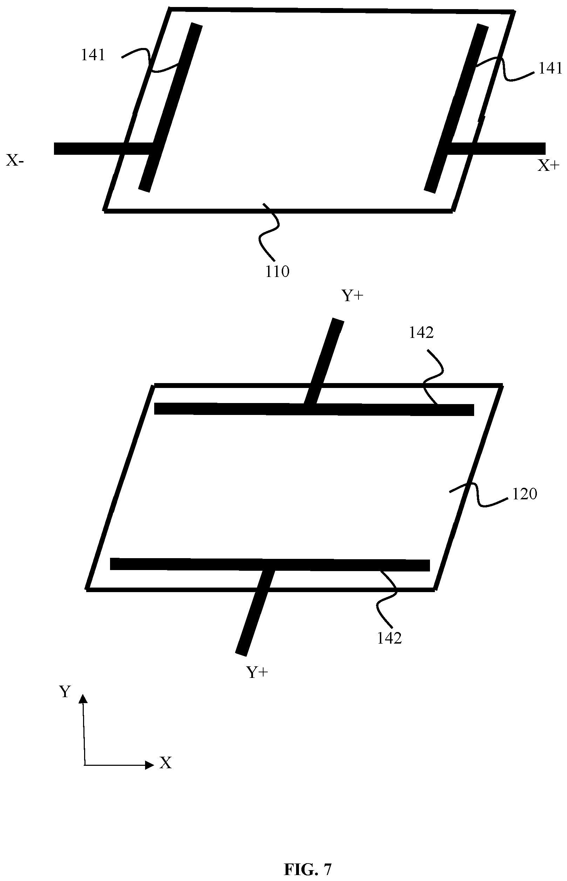

FIG. 7 is a schematic structural diagram of a first resistor layer and a second resistor layer according to some embodiments of the present disclosure. It should be noted that the description of the touch position and the touch strength in FIG. 7 and hereinafter may be applicable to the insulating layer 130 of different structures described above.

Referring to FIG. 7, in some embodiments, the first resistor layer 110 is provided with two first electrodes 141 spaced apart along a second direction (e.g., an X direction as shown in FIG. 7), one of which serves as a positive electrode and the other one of which serves as a negative electrode; the second resistor layer 120 is provided with two second electrodes 142 spaced apart along a third direction (e.g., a Y direction as shown in FIG. 7), one of which serves as a positive electrode and the other one of which serves as a negative electrode. The second direction (e.g., the X direction as shown in FIG. 7) is not parallel to the third direction (e.g., the Y direction as shown in FIG. 7). When the first resistor layer 110 is touched and deformed, the magnitude of the resistance of the first resistor layer 110 or the second resistor layer 120 in a conduction circuit depends on the touch position. At this time, based on the magnitude of a voltage of each electrode, the position of the touch position in the second direction (e.g., the X direction) may be determined on the first resistor layer 110, and the position of the touch position in the third direction (e.g., the Y direction) may be determined on the second resistor layer 120, thereby determining the position of the touch position. In some embodiments, the second direction (e.g., the X direction) or the third direction (e.g., the Y direction) may be the same as or different from the first direction (e.g., a P direction).

In some embodiments, when touched by the external force for touch control, the electrical signal received by the processor includes a first voltage of at least one first electrode 141 and a second voltage of at least one second electrode 142. By the first voltage, the position of the touch position in the second direction (e.g., the X direction) may be determined, and by the second voltage, the position of the touch position in the third direction (e.g., the Y direction) may be determined.

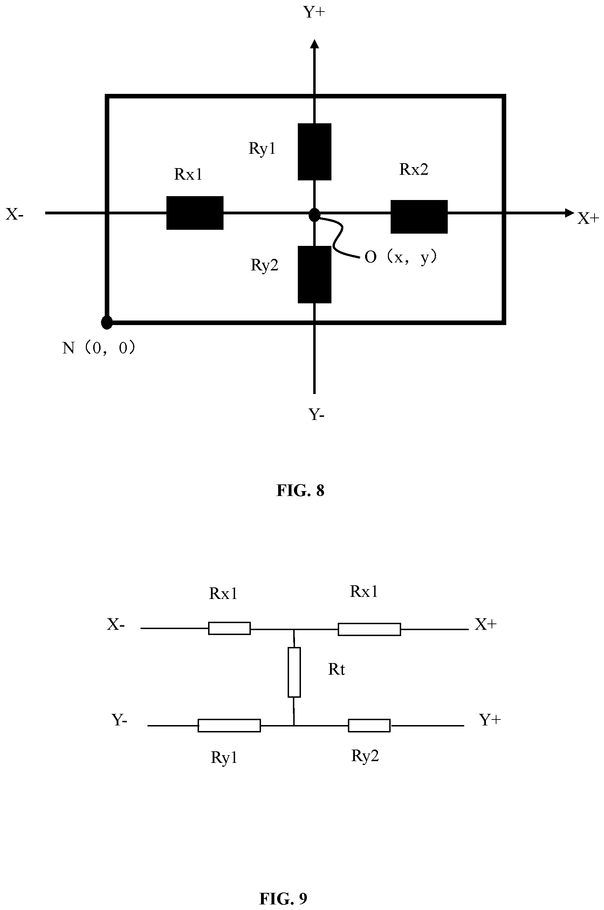

FIG. 8 is a schematic diagram of determining a touch position according to some embodiments of the present disclosure, and FIG. 9 is a schematic circuit diagram when a first resistor layer and a second resistor layer are electrically connected according to some embodiments of the present disclosure.

Referring to FIG. 8 and FIG. 9, a width dimension of the first resistor layer 110 and the second resistor layer 120 in the second direction (e.g., the X direction) is W, and a height dimension in the third direction (e.g., the Y direction) is H. When the first resistor layer 110 and the second resistor layer 120 are electrically connected, contact resistance at a contact position (e.g., a touch position O) between the first resistor layer 110 and the second resistor layer 120 is Rt; on the first resistor layer 110, resistance of a portion between the touch position O in the second direction (e.g., the X direction) and a negative electrode X- of the first electrode 141 is Rx1, and resistance of a portion between the touch position O in the second direction (e.g., the X direction) and a positive electrode X+ of the first electrode 141 is Rx2; on the second resistor layer 120, resistance of a portion between the touch position O in the third direction (e.g., the Y direction) and a negative electrode Y- of the second electrode 142 is Ry1, and resistance of a portion between the touch position O in the third direction (e.g., the Y direction) and a positive electrode Y+ of the second electrode 142 is Ry2.

Referring to FIG. 8 and FIG. 9, when determining the position of the touch position O in the second direction (e.g., the X direction), a drive voltage Vref may be input to the positive electrode X+ of the first electrode 141 of the first resistor layer 110, the negative electrode X- of the first electrode 141 may be grounded, a second voltage V_{Y+} may be measured at the positive electrode Y+ of the second electrode 142 of the second resistor layer 120, and the negative electrode Y- of the second electrode 142 may be grounded. The measured second voltage V_{Y+} corresponds to a voltage V_{Rx1} corresponding to the resistance Rx1 of a portion on the first resistor layer 110 along the second direction (e.g., the X direction) from the negative electrode X- of the first electrode 141 to the touch position O. Since the resistance on the first resistor layer 110 is uniformly distributed, a ratio of a distance x of the touch position O from the negative electrode X- of the first electrode 141 along the second direction (e.g., the X direction) to the width dimension W of the first resistor layer 110 in the second direction (e.g., the X direction) is equal to a ratio of the voltage V_{Rx1} (the second voltage V_{Y+}) corresponding to the resistance Rx1 of a portion on the first resistor layer 110 along the second direction (e.g., the X direction) from the negative electrode X- of the first electrode 141 to the touch position O to the voltage Vref corresponding to the resistance (Rx1+Rx2) of a portion on the first resistor layer 110 along the second direction (e.g., the X direction) from the negative electrode X- of the first electrode 141 to the positive electrode X+. That is, the distance x of the touch position O from the negative electrode X- of the first electrode 141 along the second direction (e.g., the X direction) may be determined by Formula (1) as follows: $x = \frac{{V}_{Y +}}{Vref} \times W$ (1)

Referring to FIG. 8 and FIG. 9, similarly, when determining the position of the touch position O in the third direction (e.g., the Y direction), the drive voltage Vref may be input to the positive electrode Y+ of the second electrode 142 of the second resistor layer 120, the negative electrode Y- of the second electrode 142 may be grounded, a first voltage V_{X+} may be measured at the positive electrode X+ of the first electrode 141 of the first resistor layer 110, and the negative electrode X- of the first electrode 141 may be grounded. The measured first voltage V_{X+} corresponds to a voltage VRy1 corresponding to the resistance Ry1 of a portion on the second resistor layer 120 along the third direction (e.g., the Y direction) from the negative electrode Y- of the second electrode 142 to the touch position O. Since the resistance on the second resistor layer 120 is uniformly distributed, a ratio of a distance y of the touch position O from the negative electrode Y- of the second electrode 142 along the third direction (e.g., the Y direction) to the height dimension H of the second resistor layer 120 in the third direction (e.g., the Y direction) is equal to a ratio of the voltage VRy1 (the first voltage Vx+) corresponding to the resistance Ry1 of a portion on the second resistor layer 120 along the third direction (e.g., the Y direction) from the negative electrode Y- of the second electrode 142 to the touch position O to the voltage Vref corresponding to the resistance (Ry1+Ry2) of a portion on the second resistor layer 120 along the third direction (e.g., the Y direction) from the negative electrode Y- of the second electrode 142 to the positive electrode Y+. That is, the distance y of the touch position O from the negative electrode Y- of the second electrode 142 along the third direction (e.g., the Y direction) may be determined by Formula (2) as follows: $y = \frac{{V}_{X +}}{Vref} \times H$ (2)

In summary, by Formula (1) and Formula (2), the position (x, y) of the touch position O relative to an intersection N (0, 0) of the negative electrode X- of the first electrode 141 and the negative electrode Y- of the second electrode 142 may be determined.

In some embodiments, the processor 150 is further configured to determine the touch strength of the external force for touch control based on the electrical signal.

In some embodiments, the electrical signal includes a third voltage between at least one first electrode 141 and at least one second electrode 142.

Since the touch strength of the external force for touch control is not easy to directly measure, and the touch strength of the external force for touch control affects the contact resistance when the first resistor layer 110 and the second resistor layer 120 are in contact, the contact resistance when the first resistor layer 110 and the second resistor layer 120 are in contact may be first determined, and then the touch strength may be determined based on the contact resistance. In some embodiments, the processor 150 is further configured to determine, based on the electrical signal, the contact resistance when the first resistor layer 110 electrically contacts the second resistor layer 120, and the contact resistance is negatively correlated with the touch strength. The higher the touch strength, the larger the contact area between the first resistor layer 110 and the second resistor layer 120, the more sufficient the contact, and the smaller the corresponding contact resistance.

Referring to FIG. 8 and FIG. 9, since the resistance on the first resistor layer 110 is uniformly distributed, when determining the position x of the touch position O in the second direction (e.g., the X direction), Formula (3) for determining Rx1 may be derived based on Formula (1) as follows: $Rx 1 = \frac{{V}_{Y +}}{Vref} \times \left(Rx1+Rx2\right)$ (3) where (Rx1+Rx2) is the total resistance of a portion on the first resistor layer 110 along the second direction (e.g., the X direction) from the negative electrode X- of the first electrode 141 to the positive electrode X+.

Similarly, since the resistance on the second resistor layer 120 is uniformly distributed, when determining the position y of the touch position O in the third direction (e.g., the Y direction), Formula (4) for determining Ry1 may be derived based on Formula (2) as follows: $Ry 1 = \frac{{V}_{X +}}{Vref} \times \left(Ry1+Ry2\right)$ (4) where (Ry1+Ry2) is the total resistance of a portion on the second resistor layer 120 along the third direction (e.g., the Y direction) from the negative electrode Y- of the second electrode 142 to the positive electrode Y+.

Referring to FIG. 8 and FIG. 9, when determining the magnitude of the external force for touch control, the drive voltage Vref may be applied between the second electrode 142 of the second resistor layer 120 and the first electrode 141 of the first resistor layer 110. Merely by way of example, the drive voltage Vref may be input to the negative electrode Y- of the second electrode 142, and the negative electrode X- of the first electrode 141 may be grounded. At this time, the resistance corresponding to the drive voltage Vref includes: the resistance Ry1 of a portion on the second resistor layer 120 between the negative electrode Y- of the second electrode 142 and the touch position O; the contact resistance Rt at the touch position O; and the resistance Rx1 of a portion on the first resistor layer 141 between the touch position O and the negative electrode X- of the first electrode 141. At the positive electrode X+ of the first electrode 141 of the first resistor layer 110, a third voltage Vt may be measured. The measured third voltage Vt corresponds to the voltage V_{Rx1} corresponding to the resistance Rx1 of the portion on the first resistor layer 110 along the second direction (e.g., the X direction) from the negative electrode X- of the first electrode 141 to the touch position O. Based on the consistency of a total current I in the circuit, the total current may be determined based on Formula (5) as follows: $I = \frac{Vt}{Rx 1} = \frac{Vref}{Rt + Rx 1 + R}$ (5) where Rx1 may be derived based on Formula (3), and Ry1 may be derived based on Formula (4).

By transforming Formula (5) to obtain Formula (6), the contact resistance Rt may be determined as follows: $Rt = \frac{Vref}{Vt} \times Rx 1 - Rx 1 - Ry 1$ (6)

The processor 150 may determine the corresponding touch strength based on the contact resistance Rt. It should be noted that, although the position x of the touch position O in the second direction X, the position y in the third direction Y, and the touch strength are obtained in a step-by-step manner in the above description, the pressure sensor 100 may simultaneously display the touch position O and the touch strength.

In some embodiments, the processor 150 is configured to identify the touch position and/or the touch strength based on a machine learning model, thereby improving the identification accuracy of the processor 150.

In some embodiments, the processor 150 may determine the machine learning model by training an initial machine learning model. The initial machine learning model may be stored in the processor 150. The processor 150 may obtain a plurality of training samples to train the initial machine learning model.

The training samples may be the first voltage V_{X+}, the second voltage V_{Y+}, and the third voltage Vt corresponding to an external force, and the labels of the training samples may be the touch position (x, y) of the external force and the touch strength of the external force. The labeled training samples are input into the initial machine learning model. The parameters of the initial machine learning model are updated through training. When the trained model satisfies a preset condition, the training ends, and the trained machine learning model is obtained.

In some embodiments, the machine learning model may include one or a combination of a fully connected neural network (FNN), a deep neural network (DNN), a convolutional neural network (CNN), a recurrent neural network (RNN), a feature pyramid network (FPN), a generative adversarial network (GAN), a CycleGAN model, a pix2pix model, or the like.

In some embodiments, the training samples may include external forces of different positions and different touch strengths, thereby increasing the data range of the training samples and improving the reading accuracy of the pressure sensor 100.

In some embodiments, the processor 150 is further configured to generate different instructions according to different touch strengths, thereby improving the touch flexibility of the pressure sensor 100. Merely by way of example, when the pressure sensor 100 is applied to an earphone, the user may control the output volume of the earphone through the touch strength. When the touch strength of the external force used by the user is relatively large, the processor 150 may generate an instruction to increase the output volume; when the touch strength of the external force used by the user is relatively small, the processor 150 may generate an instruction to decrease the output volume.

In some embodiments, when different positions along the first direction X on the pressure sensor 100 have varying touch responses (e.g., more descriptions regarding the varying touch responses may be found in FIG. 4 and related descriptions thereof), the processor 150 is further configured to generate different instructions in response to different sliding directions when touched by an external force. Merely by way of example, when the pressure sensor 100 is applied to a touch display screen (e.g., a mobile phone display screen), the user may control the interface displayed on the display screen through different touch gestures. When the sliding direction during external force for touch is close to or parallel to the first direction X, the processor 150 may generate an instruction to close the current interface; when the sliding direction during external force for touch is opposite to or approximately opposite to the first direction X, the processor 150 may generate an instruction to open a new interface.

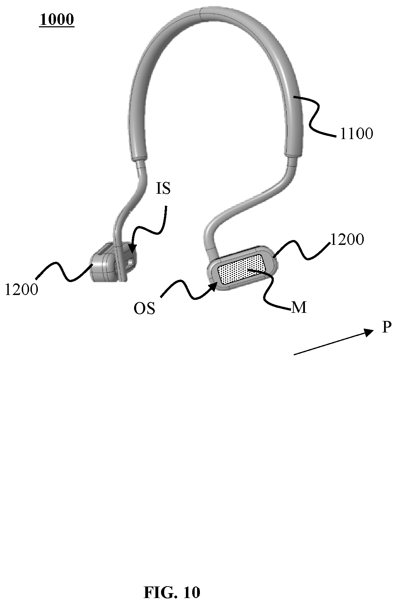

FIG. 10 is a schematic structural diagram of a wearable device according to some embodiments of the present disclosure.

As shown in FIG. 10, according to an aspect of the present disclosure, a wearable device 1000 is also provided. The wearable device 1000 includes the pressure sensor 100 described in any of the preceding embodiments. The pressure sensor 100 is disposed on a side of the wearable device 1000 facing away from a user in a worn state, thereby facilitating user operation.

In some embodiments, the wearable device 1000 may include, but is not limited to, an earphone, an ear hook, glasses, a helmet, or the like. Merely by way of example, taking the wearable device 1000 as a behind-the-ear earphone, the wearable device 1000 may include a connector 1100. Sound-emitting parts 1200 are respectively connected to two ends of the connector 1100. The two sound-emitting parts 1200 respectively output sound to the ears of the user in a worn state.

In the worn state, the sound-emitting part 1200 has an inner side surface IS facing the user and an outer side surface OS facing away from the user. The inner side surface IS of the sound-emitting part 1200 is provided with a sound-emitting hole to output sound to the ear of the user. The pressure sensor 100 may be disposed on the outer side surface OS for operation by the user, and the corresponding touch sensing region is the region M as shown in FIG. 10.

In some embodiments, the first direction P may be any direction within the outer side surface OS. For example, the first direction P may be the longitudinal axis direction of the sound-emitting part 1200 within the outer side surface OS, as shown in FIG. 10, thereby allowing the touch sensing region (e.g., the region M) of the pressure sensor 100 to have a convenient sensitivity with a larger region along the longitudinal axis direction of the sound-emitting part 1200, providing the user with a larger region for gesture touch and improving the user experience.

Through the design of the insulating layer 130, the wearable device has high touch sensitivity. During external force for touch, at least one of the touch position, the touch strength, and the sliding direction of the touch may be determined. The touch accuracy is high, and the touch flexibility is strong, thereby facilitating user operation and improving user experience.

Basic concepts have been described above. It is apparent to those skilled in the art that the above detailed disclosure is merely by way of example and does not constitute a limitation on the present disclosure. Although not explicitly stated herein, those skilled in the art may make various modifications, improvements, and amendments to the present disclosure. Such modifications, improvements, and amendments are suggested in the present disclosure. Therefore, such modifications, improvements, and amendments still fall within the spirit and scope of the exemplary embodiments of the present disclosure.

Further, the present disclosure uses specific words to describe the embodiments of the present disclosure. As used herein, phrases such as 'an embodiment', 'one embodiment', and/or 'some embodiments' refer to a certain feature, structure, or characteristic related to at least one embodiment of the present disclosure. Therefore, it should be emphasized and noted that the phrases 'one embodiment', 'an embodiment', or 'an alternative embodiment' mentioned two or more times in different locations in the present disclosure do not necessarily refer to the same embodiment. Furthermore, certain features, structures, or characteristics in one or more embodiments of the present disclosure may be combined appropriately.

Similarly, it should be noted that, to simplify the expression of the present disclosure and thereby facilitate understanding of one or more embodiments of the present disclosure, in the preceding description of the embodiments of the present disclosure, various features are sometimes grouped into a single embodiment, figure, or description thereof. However, this method of disclosure does not mean that the subject matter of the present disclosure requires more features than those mentioned in the claims. Indeed, the features of the embodiments are fewer than all the features of the single embodiment disclosed above.

Numbers describing the quantities of components and attributes are used in some embodiments. It should be understood that the numerical parameters used in the present disclosure and the claims are all approximate values, and the approximate values may vary depending on the characteristics required by individual embodiments. In some embodiments, the numerical parameters should consider the specified significant digits and adopt a general method of rounding. Although the numerical ranges and parameters used in some embodiments of the present disclosure to confirm their breadth of scope are approximate values, in specific embodiments, the settings of such values are made as precisely as practicable.

Finally, it should be understood that the embodiments described in the present disclosure are merely for illustrating the principles of the embodiments of the present disclosure. Other variations may also fall within the scope of the present disclosure. Therefore, by way of example and not limitation, alternative configurations of the embodiments of the present disclosure may be considered consistent with the teachings of the present disclosure. Accordingly, the embodiments of the present disclosure are not limited to the embodiments explicitly introduced and described in the present disclosure.

## Claims

1. A pressure sensor, comprising:
a first resistor layer and a second resistor layer disposed opposite to each other, a touch sensing region being provided on a side of the first resistor layer facing away from the second resistor layer;
an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer;
a processor, configured to read an electrical signal generated after the first resistor layer and the second resistor layer are electrically connected.

2. The pressure sensor of claim 1, wherein the insulating layer includes an insulating film provided with a hole array, the hole array including a plurality of holes, and the hole array is configured to: allow the deformation of the first resistance layer generated when the first resistance layer is touched by the external force to pass through a hole of the plurality of holes corresponding to the touched region.

3. The pressure sensor of claim 2, wherein a diameter of each of the plurality of holes is 3 mm-10 mm, and a spacing between any two adjacent holes is 3 mm-5 mm.

4. The pressure sensor of claim 2, wherein diameters of the holes in the hole array gradually increase in a first direction.

5. The pressure sensor of claim 1, wherein the insulating layer includes an insulating coating, and a thickness of the insulating coating is 1 nm-999 nm.

6. The pressure sensor of claim 5, wherein the insulating coating includes nanoparticles.

7. The pressure sensor of claim 1, wherein a thickness of the insulating layer in an assembled state is less than a thickness of the insulating layer in a natural state.

8. The pressure sensor of claim 1, wherein the processor is further configured to identify a touch position of the external force based on the electrical signal.

9. The pressure sensor of claim 8, wherein the first resistor layer is provided with two first electrodes spaced apart along a second direction, the second resistor layer is provided with two second electrodes spaced apart along a third direction, the second direction is not parallel to the third direction, and when touched by the external force, the electrical signal includes a first voltage of at least one of the two first electrodes and a second voltage of at least one of the two second electrodes.

10. The pressure sensor of claim 9, wherein the processor is further configured to determine a touch strength of the external force based on the electrical signal.

11. The pressure sensor of claim 10, wherein the electrical signal further includes a third voltage between at least one of the two first electrodes and at least one of the two second electrodes.

12. The pressure sensor of claim 10, wherein the processor is configured to identify the touch position and the touch strength based on a machine learning model.

13. The pressure sensor of claim 10, wherein the processor is configured to determine, based on the electrical signal, a contact resistance when the first resistor layer electrically contacts the second resistor layer, and the contact resistance is negatively correlated with the touch strength.

14. The pressure sensor of claim 10, wherein the processor is configured to generate different instructions according to different touch strengths.

15. The pressure sensor of claim 1, wherein the insulating layer includes a plurality of microbeads having pressure-sensitive properties, and a gap between any two adjacent microbeads of the plurality of microbeads is reserved.

16. A wearable device, comprising:
a pressure sensor, disposed on a side of the wearable device facing away from a user in a worn state; wherein:
the pressure sensor includes:
a first resistor layer and a second resistor layer disposed opposite to each other, a touch sensing region being provided on a side of the first resistor layer facing away from the second resistor layer;
an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer;
a processor, configured to read an electrical signal generated after the first resistor layer and the second resistor layer are electrically connected.

17. The wearable device of claim 16, wherein the processor is further configured to determine a touch strength of the external force based on the electrical signal.

18. The wearable device of claim 17, wherein the processor is further configured to generate different instructions in response to different touch strengths when touched by the external force.

19. The wearable device of claim 16, wherein the pressure sensor has varying touch responses at different positions along a first direction, and the processor is configured to generate different instructions in response to different sliding directions when touched by the external force.

20. A wearable device, comprising:
a pressure sensor, disposed on a side of the wearable device facing away from a user in a worn state; wherein:
the pressure sensor is configured to generate different instructions in response to different touch strengths when touched by an external force.

21. The wearable device of claim 20, wherein the pressure sensor has varying touch responses at different positions along a first direction, and the processor is configured to generate different instructions in response to different sliding directions when touched by the external force.

22. The wearable device of claim 20, wherein the pressure sensor includes:
a first resistor layer and a second resistor layer disposed opposite to each other, a touch sensing region being provided on a side of the first resistor layer facing away from the second resistor layer;
an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer;
a processor, configured to read an electrical signal generated after the first resistor layer and the second resistor layer are electrically connected.

23. A wearable device, comprising:
a pressure sensor, disposed on a side of the wearable device facing away from a user in a worn state; wherein:
the pressure sensor has varying touch responses at different positions along a first direction, and the pressure sensor is configured to generate different instructions in response to different sliding directions when touched by an external force.

24. The wearable device of claim 23, wherein the pressure sensor is further configured to generate different instructions in response to different touch strengths when touched by the external force.

25. The wearable device of claim 23, wherein the pressure sensor includes:
a first resistor layer and a second resistor layer disposed opposite to each other, a touch sensing region being provided on a side of the first resistor layer facing away from the second resistor layer;
an insulating layer, disposed between the first resistor layer and the second resistor layer, the insulating layer being configured such that: when no external force for touch control is applied, the insulating layer electrically insulates the first resistor layer from the second resistor layer; and when an external force for touch control is applied, a touched region on the touch sensing region deforms toward the second resistor layer, and the insulating layer allows the deformed first resistor layer to form an electrical connection with the second resistor layer;
a processor, configured to read an electrical signal generated after the first resistor layer and the second resistor layer are electrically connected.
